# EUROPEAN PATENT APPLICATION

(11) **EP 4 787 173 A1**
(43) Date of publication of application: **05.08.2026**
(21) Application number: 24870359.7
(22) Date of filing: 03.09.2024
(51) Int. Cl.: G06F 12/0831

(54) **MEMORY ACCESS METHOD AND DEVICE, AND STORAGE MEDIUM**

(30) Priority: 27.09.2023 CN 202311267294
(71) Applicant: Cloud Intelligence Assets Holding (Singapore) Private Limited, Singapore 189554 (SG)
(72) Inventor: CHEN, Liang, Hangzhou, Zhejiang 310030 (CN); TIAN, Xianting, Hangzhou, Zhejiang 310030 (CN)
(74) Representative: Barker Brettell LLP
(86) International application number: PCT/CN2024/116639
(87) International publication number: WO 2025/066813

(57) **Abstract**

Embodiments of the present disclosure provide a memory access method, a device, and a storage medium. In a device pass-through scenario, it is proposed that a shadow page is constructed for a target physical memory page in which index information in an available ring is located. Through maintaining of the shadow page, index information accessed by a pass-through device may lag behind index information maintained by a virtual machine, and work such as page fault recovery may be completed within the lag period, thereby ensuring that memory data has been prepared before the pass-through device obtains a to-be-accessed virtual machine memory address, and ensuring that the pass-through device normally implements DMA access without sensing a page fault problem. In this way, a memory page fault can also be supported in the device pass-through scenario. Based on this, reuse of a physical memory page on demand can be supported without affecting memory access by the pass-through device, thereby effectively improving utilization of a physical memory.

## Description

This application claims priority to Chinese Patent Application No. 202311267294.X, filed with the China National Intellectual Property Administration on September 27, 2023 and entitled "MEMORY ACCESS METHOD, DEVICE, AND STORAGE MEDIUM", which is incorporated herein by reference in its entirety.

### TECHNICAL FIELD

The present disclosure relates to the field of virtualization technologies, and in particular, to a memory access method, a device, and a storage medium.

### BACKGROUND

Device pass-through (Device Pass-Through) is a technology supporting a virtual machine in directly accessing an external device on a host machine. This type of external device may be referred to as a pass-through device. Through the technology, a sharing capability of the pass-through device is sacrificed, and the pass-through device is dedicated to a single virtual machine, to provide a complete device function and better device performance for the virtual machine.

In a device pass-through scenario, the pass-through device directly accesses a virtual machine memory in a DMA (Direct Memory Access, direct memory access) manner. This requires that a whole memory of a virtual machine needs to maintain exclusive occupation of a corresponding physical memory of a host machine, and this part of the physical memory is not allowed to be reused by another virtual machine. Otherwise, the pass-through device may access memory data of the another virtual machine, causing a data security problem.

However, since the pass-through devices typically do not access the virtual machine memory at all times or across the entire address space, this requirement of exclusive occupation of a physical memory in the device pass-through scenario results in a significant waste of a physical memory.

### SUMMARY

Various aspects of the present disclosure provide a memory access method, a device, and a storage medium, to improve utilization of a physical memory in a host machine in a device pass-through scenario.

An embodiment of the present disclosure provides a memory access method, applied to a virtual machine manager in a host machine, where a to-be-accessed virtual machine memory address is transferred, between a target virtual machine and a target pass-through device on the host machine, based on an available ring, and the method includes:
determining, in response to monitoring an update event of index information occurring on the available ring, the to-be-accessed virtual machine memory address to which updated index information in the available ring points;
when detecting that a determined to-be-accessed virtual machine memory address is in a page fault state, updating, after page fault recovery on the to-be-accessed virtual machine memory address is completed, a shadow page constructed for a target physical memory page in which the index information is located, so that the shadow page is consistent with the target physical memory page; and
notifying the target pass-through device of the update event, to trigger the target pass-through device to access the shadow page and a physical memory page other than the target physical memory page in physical memory pages in which the available ring is located, to obtain the to-be-accessed virtual machine memory address.

An embodiment of the present disclosure further provides a virtual machine manager, including:
a monitoring module, configured to determine, in response to monitoring an update event of index information occurring on an available ring, a to-be-accessed virtual machine memory address to which updated index information in the available ring points;
a processing module, configured to: when detecting that the to-be-accessed virtual machine memory address is in a page fault state, update, after page fault recovery on the to-be-accessed virtual machine memory address is completed, a shadow page constructed for a target physical memory page in which the index information is located, so that the shadow page is consistent with the target physical memory page; and
a notification module, configured to notify a target pass-through device of the update event, to trigger the target pass-through device to access the shadow page and a physical memory page other than the target physical memory page in physical memory pages in which the available ring is located, to obtain the to-be-accessed virtual machine memory address;
where the to-be-accessed virtual machine memory address is transferred, between a target virtual machine and the target pass-through device on a host machine, based on the available ring.

An embodiment of the present disclosure further provides a physical machine, including a memory and a processor, where a virtual machine manager runs in the processor;
the memory is configured to store one or more computer instructions;
the processor is coupled to the memory and configured to execute the one or more computer instructions, to perform the memory access method by using the virtual machine manager.

An embodiment of the present disclosure further provides a computer-readable storage medium storing computer instructions which, when executed by one or more processors, cause the one or more processors to perform the memory access method.

An embodiment of the present disclosure provides a computer program product, including a computer program, where when the computer program is executed by a processor, the method according to any one of the aspects is implemented.

In the embodiments of the present disclosure, in a device pass-through scenario, it is proposed that a shadow page is constructed for a target physical memory page in which index information in an available ring is located. In this way, when a to-be-accessed virtual machine memory address is transferred, between the target virtual machine and the target pass-through device, based on the available ring, the virtual machine manager may monitor an update event of the index information occurring on the available ring, and when the to-be-accessed virtual machine memory address to which updated index information points has a page fault problem, update the shadow page after ensuring that page fault recovery on the virtual machine memory address is completed, so that the shadow page is consistent with the target physical memory page. After updating the shadow page, the virtual machine manager notifies the target pass-through device of the update event. The target pass-through device accesses the shadow page and a physical memory page other than the target physical memory page in physical memory pages in which the available ring is located, to obtain the to-be-accessed virtual machine memory address. Based on this, in this embodiment, through maintaining of the shadow page, index information accessed by a pass-through device may lag behind index information maintained by a virtual machine, and work such as the page fault recovery may be completed within the lag period, thereby ensuring that memory data preparation has been completed before the pass-through device obtains the to-be-accessed virtual machine memory address, and ensuring that the pass-through device normally implements DMA access without sensing the page fault problem. In this way, a memory page fault can also be supported in the device pass-through scenario. Based on this, reuse of a physical memory page on demand can be supported without affecting memory access by the pass-through device, thereby effectively improving utilization of a physical memory.

### BRIEF DESCRIPTION OF DRAWINGS

Accompanying drawings described herein are used for providing further understanding of the present disclosure, and constitute a part of the present disclosure. Exemplary embodiments of the present disclosure and descriptions thereof are used for explaining the present disclosure, and do not constitute an inappropriate limitation to the present disclosure.
FIG. 1 is a schematic flowchart of a memory solution method according to an exemplary embodiment of the present disclosure.
FIG. 2 is a schematic logical diagram of a memory access method according to an exemplary embodiment of the present disclosure.
FIG. 3 is a schematic diagram of processing logic for an available ring according to an exemplary embodiment of the present disclosure.
FIG. 4 is a schematic flowchart of another memory access method according to an exemplary embodiment of the present disclosure.
FIG. 5 is a schematic logical diagram of the memory access method shown in FIG. 4.
FIG. 6 is a schematic structural diagram of a virtual machine manager according to another exemplary embodiment of the present disclosure.
FIG. 7 is a schematic structural diagram of a physical machine according to still another exemplary embodiment of the present disclosure.

### DESCRIPTION OF EMBODIMENTS

To make the objectives, technical solutions, and advantages of the present disclosure clearer, the following clearly and completely describes the technical solutions of the present disclosure with reference to specified embodiments of the present disclosure and corresponding drawings. Apparently, the described embodiments are only a part rather than all of the embodiments of the present disclosure. Based on the embodiments of the disclosure, all other embodiments obtained by a person of ordinary skill in the art without making creative effort should fall within the scope of protection of the present disclosure.

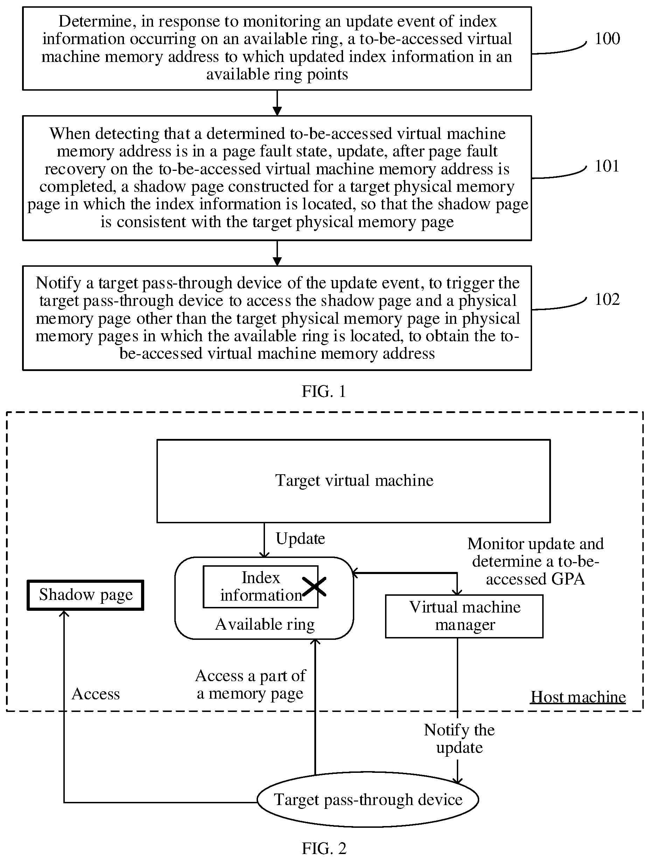

FIG. 1 is a schematic flowchart of a memory solution method according to an exemplary embodiment of the present disclosure. FIG. 2 is a schematic logical diagram of a memory access method according to an exemplary embodiment of the present disclosure.

Referring to FIG. 2, in this embodiment, several virtual machines (Virtual Machines, VMs) may be deployed on a host machine, and a virtual machine manager (Virtual Machine Manager, VMM) is further deployed on the host machine.

In this embodiment, the host machine may be a computer device having functions such as computing, storage, and communication, for example, may be a single server device, or may be a cloud server array. In this embodiment, the virtual machine manager may be configured to perform task scheduling, load balancing, state monitoring, resource management, and the like on the virtual machine on the host machine. The virtual machine manager may be, for example, a hypervisor.

Referring to FIG. 2, the host machine is further equipped with external devices. The external devices may be various I/O devices externally connected to the host machine. Based on a device pass-through technology, the virtual machine may directly access, through the virtual machine manager, an I/O device externally connected to the host machine. In this way, an I/O operation path of the virtual machine is almost the same as an I/O path in a non-virtualization environment. Such I/O device is a pass-through device mentioned in the background. In this embodiment, the pass-through device may include, but is not limited to, a network interface card, a storage medium, and the like. The storage medium may be a persistent storage medium such as a magnetic disk or a hard disk. The pass-through device may be connected to a CPU of the host machine through a communication interface in a communication way. According to different forms of the communication interface, the pass-through device may be implemented as a PCI device, a PCIe device, or the like.

In this embodiment, an I/O operation of the virtual machine on the pass-through device may be supported by using a virtio technology.

Virtio is an I/O paravirtualization technology. It is an abstraction of a set of general-purpose external devices in a paravirtualized VMM, and is a front-end and back-end architecture that includes a device driver, a virtualization device, and a virtualization queue (virt Queue) for communication between the device driver and the virtualization device. Where the device driver is located in the virtual machine, and is a driver corresponding to the virtualization device in the virtual machine. The virtualization device is obtained by the VMM based on external device virtualization. Both the device driver and the virtualization device may read data from the virtualization queue, write data into the virtualization queue, and the like. The device driver stores I/O request information into the virtualization queue, and then notifies the virtualization device. The virtualization device may obtain the I/O request information from the virtualization queue for processing. Where the virtualization queue may include an available ring (Available Ring), a used ring (Used Ring), and a descriptor queue (descriptor ring). The available ring and the used ring may store an index of a logical buffer block (buffer), description information of the logical buffer block is stored in the descriptor queue, and each logical buffer block may point to a virtual machine memory address.

Based on the Virtio technology, a virtual machine memory address corresponding to an I/O operation is transferred, between a virtual machine and a pass-through device associated with the virtual machine, by using the virtualization queue.

An inventor finds during the research that currently, a pass-through device may directly access a virtual machine memory in a DMA manner, that is, after obtaining a virtual machine memory address corresponding to an I/O operation by using the foregoing virtualization queue, the pass-through device may initiate a DMA access operation according to the virtual machine memory address, to access a corresponding physical memory. Therefore, an existing device pass-through technology requires that a whole memory of a virtual machine needs to maintain exclusive occupation of a corresponding physical memory of the host machine, and this part of the physical memory is not allowed to be reused by another virtual machine, causing a great waste of the physical memory.

Therefore, this embodiment provides an improved memory access solution, so that flexible scheduling on the physical memory is supported in the device pass-through scenario, to improve utilization of the physical memory. Referring to FIG. 1, the memory access method provided in this embodiment may include the following steps.

Step 100: determine, in response to monitoring an update event of index information occurring on an available ring, a to-be-accessed virtual machine memory address to which updated index information in the available ring points.

Step 102: when detecting that a determined to-be-accessed virtual machine memory address is in a page fault state, update, after page fault recovery on the to-be-accessed virtual machine memory address is completed, a shadow page constructed for a target physical memory page in which the index information is located, so that the shadow page is consistent with the target physical memory page.

Step 103: notify a target pass-through device of the update event, to trigger the target pass-through device to access the shadow page and a physical memory page other than the target physical memory page in physical memory pages in which the available ring is located, to obtain the to-be-accessed virtual machine memory address.

For ease of description, in this embodiment, the memory access method is described by using a target virtual machine on the host machine and a target pass-through device corresponding to the target virtual machine as an example. It should be understood that the target virtual machine may be any virtual machine on the host machine, and the target pass-through device may be any pass-through device associated with the target virtual machine on the host machine.

Referring to FIG. 2, the memory access method provided in this embodiment may be implemented by a virtual machine manager in the host machine. According to the memory access method provided in this embodiment, technical improvement is made based on the existing Virtio technology, to improve utilization of a physical memory of the host machine.

As mentioned above, after obtaining the virtual machine memory address corresponding to the I/O operation by using the foregoing virtualization queue, the pass-through device initiates the DMA access operation according to the virtual machine memory address. Therefore, this embodiment provides a technical concept of supporting memory flexibility in the device pass-through scenario: before obtaining the virtual machine memory address corresponding to the I/O operation by using the foregoing virtualization queue, the pass-through device completes memory data preparation work under the virtual machine memory address, to ensure that, after obtaining the virtual machine memory address, the pass-through device can normally access the corresponding memory data. Under this concept, a physical memory occupied by the target virtual machine may be reused by another virtual machine, and before the target pass-through device initiates DMA access to the virtual memory address, swapped-out memory data is swapped back, to support normal implementation of the DMA access by the target pass-through device. In other words, the target pass-through device does not sense a memory swap-out/swap-back process under the target virtual machine, so that a DMA process of the target pass-through device is not affected.

To implement the concept, this embodiment proposes that time for the target pass-through device to learn of the virtual machine memory address corresponding to the I/O operation is delayed until the foregoing memory data preparation is completed. In this way, sufficient processing time can be provided for the foregoing memory data preparation work.

The inventor finds during the research that the available ring in the foregoing virtualization queue usually includes the following parts:
index information (index): the index information points to a next available index position in the available ring; and
index position (ring []): a descriptor identifier is recorded at the index position, and the index position points to a descriptor in a descriptor queue (descriptor ring) or a head descriptor of a descriptor chain.

Certainly, the available ring may further include other parts such as flags, which are not further described herein.

Only the device driver in the virtual machine has permission to perform a write operation on the available ring. When a new I/O operation may be performed, the device driver updates the index information in the available ring, and the pass-through device may perform level-by-level searching based on the index information in the available ring, to finally determine a to-be-accessed virtual machine memory address, and then implement the DMA access. It can be learned that the to-be-accessed virtual machine memory address is actually transferred between the target virtual machine and the target pass-through device based on the available ring.

Therefore, this embodiment proposes that time for the target pass-through device to sense the index information in the available ring may be delayed, to achieve the foregoing technical objective of delaying the time for the target pass-through device to learn of the virtual machine memory address corresponding to the I/O operation.

It should be understood that the available ring in this embodiment and other parts such as the used ring in the foregoing virtualization queue are all stored in the physical memory of the host machine. In this embodiment, the virtual machine manager may maintain a page table for the target virtual machine, and the page table may be used for mapping a virtual machine memory address accessed by the target virtual machine to a physical memory address of the host machine. Optionally, the page table may use an extended page table (EPT), a shadow page table (Shadow page table), or the like. A technical type of a used page table is not limited in this embodiment, provided that the page table supports mapping the virtual machine memory address accessed by the target virtual machine to the physical memory address of the host machine. In this way, when a device driver in the target virtual machine initiates a write operation on the index information in the available ring, a virtual machine memory address (GPA) in the write operation may be translated into a physical memory address (HPA) of the host machine based on the page table, to update the index information in the available ring in the physical memory. In addition, during actual application, the index information usually occupies only one physical memory page, that is, a specification of the index information is usually less than 4 kb (a specification of a single memory page).

To delay the time for the target pass-through device to sense the index information in the available ring, this embodiment proposes that the shadow page may be constructed for the target physical memory page in which the index information is located, and the shadow page is visible to the target pass-through device while the target physical memory page is invisible to the target pass-through device. In other words, the target pass-through device can access the shadow page rather than the target physical memory page on which the device driver can directly perform the write operation. During actual application, in addition to the index information, the target physical memory page may further include other content in the virtualization queue, for example, content in the used ring or the descriptor queue. In this embodiment, the virtual machine manager performs maintaining by using the target physical memory page as a unit, and does not distinguish specified content of the target physical memory page in detail.

Based on this, referring to FIG. 1, in step 100, in response to monitoring the update event of the index information occurring on the available ring, the to-be-accessed virtual machine memory address to which the updated index information in the available ring points may be determined.

In this step, the virtual machine manager monitors the update event of the index information occurring on the available ring, and the target pass-through device is not allowed to perform monitoring. This is different from the conventional Virtio technology. Through the setting in step 100, it can be ensured that the target pass-through device does not sense the update event of the index information occurring on the available ring.

As mentioned above, the update event of the index information occurring on the available ring is initiated by the device driver in the target virtual machine. According to the conventional Virtio technology, after completing an update operation on the index information, the device driver initiates an update notification to the target pass-through device, to trigger the target pass-through device to access the available ring. To prohibit the target pass-through device from obtaining the update notification, in this embodiment, the virtual machine manager may intercept the update notification.

In an optional implementation, the virtual machine manager may intercept a specified write instruction when monitoring that the target virtual machine sends the specified write instruction for a specified base address register address of the target pass-through device, to determine that the update event of the index information occurring on the available ring is monitored. In the conventional Virtio technology, the device driver may write specified content to the specified base address register address by using the specified write instruction, to trigger the target pass-through device to learn of, based on the specified content, the update event of the index information occurring on the available ring. In this optional implementation, it is proposed that an interception point is set on a notification link of the device driver to the target pass-through device, that is, the specified write instruction of the device driver to the specified base address register address of the target pass-through device is intercepted. In this way, the write instruction is quitted and no longer executed, and the specified content is not written to the specified base address register address of the target pass-through device. Correspondingly, the target pass-through device does not sense the update event of the index information, and further, the target pass-through device does not access the index information in the available ring temporarily.

Certainly, since the virtual machine manager has permission to manage and control a plurality of operations on the target virtual machine, in this embodiment, another implementation may also be used to ensure that the target pass-through device does not sense the update event of the index information occurring on the available ring. No more examples are provided herein.

In step 100, the virtual machine manager may further determine the to-be-accessed virtual machine memory address to which the updated index information in the available ring points.

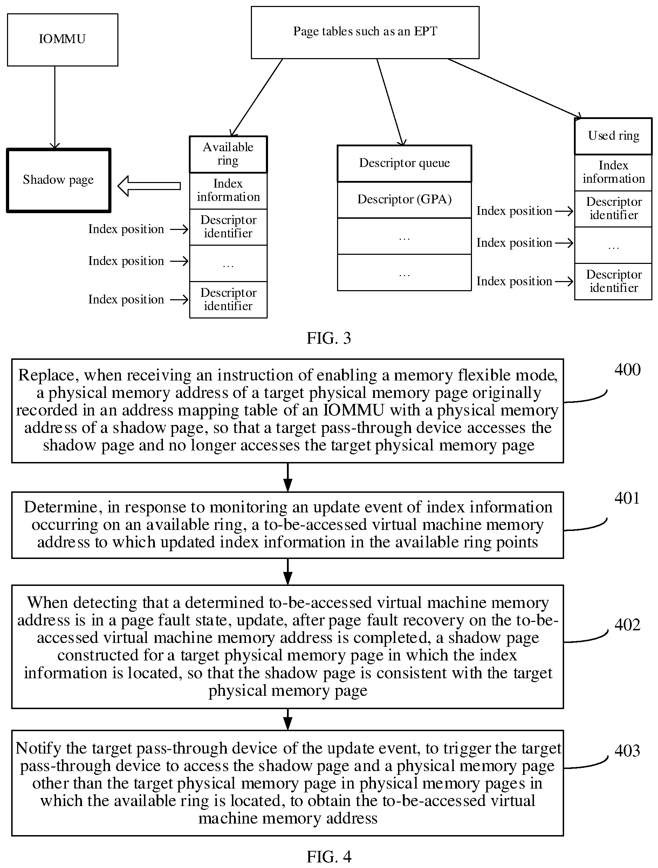

FIG. 3 is a schematic diagram of processing logic for an available ring according to an exemplary embodiment embodiment of the present disclosure. Referring to FIG. 3, the virtual machine manager may determine an index position to which the updated index information points in the available ring; obtain a descriptor identifier at the index position; and search a descriptor queue associated with the available ring for a descriptor corresponding to the descriptor identifier, to obtain a virtual machine memory address to which the found descriptor points, and use the virtual machine memory address as the to-be-accessed virtual machine memory address. Where a single descriptor in the descriptor queue points to a single virtual machine memory address.

It should be understood that, in step 100, the available ring accessed by the virtual machine manager is the available ring maintained by the device driver, and the foregoing shadow page is not involved herein. As mentioned above, the virtual machine manager maintains the page table for the target virtual machine. The virtual machine manager may obtain, from the foregoing intercepted specified write instruction, a virtual machine memory address (GPA) in which the index information is located, and then perform address translation based on a page, to determine a physical memory address (HPA) of the target physical memory page in which the index information is located, so as to access the target physical memory page. In a same address translation manner, the virtual machine manager may further access the descriptor queue, to obtain the to-be-accessed virtual machine memory address to which the updated index information points.

As mentioned above, based on the memory access method provided in this embodiment, the memory flexibility may be supported, that is, memory swap is supported on the physical memory occupied by the target virtual machine. A memory swap (Swap) technology is a technology in which an infrequently used memory page is copied to a magnetic disk and a physical memory is released to increase a system available memory. A memory utilization rate of a physical machine can be significantly improved by using the memory swap technology. The technology plays an important role in a high-memory-density data center and cloud computing. However, memory swap may cause a page fault problem (Page fault). This may lead to the page fault problem at a virtual machine memory address of the target virtual machine.

Still referring to FIG. 1, in step 101, the virtual machine manager may further detect whether the to-be-accessed virtual machine memory address determined in step 100 is in a page fault state, that is, whether there is a page fault problem.

In an optional implementation, the virtual machine manager may query the page table maintained for the target virtual machine for page entry information corresponding to the to-be-accessed virtual machine memory address; determine that the to-be-accessed virtual machine memory address is in the page fault state if the page entry information carries a page fault identifier. As mentioned above, the page table may be used for mapping the virtual machine memory address accessed by the target virtual machine to the physical memory address of the host machine. Therefore, in a process of performing memory interaction on the physical memory occupied by the target virtual machine, the virtual machine manager may add the page fault identifier to a swapped-out physical memory address. In this way, in the page table, a virtual machine memory address that is mapped to the type of physical memory address is in the page fault state. In other words, in this optional implementation, the page fault identifier may be recorded in the page table maintained by the virtual machine manager for the target virtual machine, and is used as a basis for the virtual machine manager to determine whether the to-be-accessed virtual machine memory address is in the page fault state.

Certainly, in this embodiment, another implementation may also be used to implement work of detecting the page fault state in step 101. For example, the virtual machine manager initiates a page fault state query request to an operating system of the host machine, and the operating system returns a query result. No more examples are provided herein, and a detection manner supported in this embodiment is not limited thereto.

Subsequent processing logic after detection is described below in two cases.

In a case, the virtual machine manager detects that the to-be-accessed virtual machine memory address determined in step 100 has the page fault problem, and then after page fault recovery on the virtual machine memory address is completed, the virtual machine manager may update a shadow page corresponding to the target physical memory page in which the index information is located, so that the shadow page is consistent with the target physical memory page.

In this case, the virtual machine manager updates the shadow page only after determining that the page fault recovery on the to-be-accessed virtual machine memory address has been completed. This can ensure that the page fault recovery on the to-be-accessed virtual machine memory address has been completed when the target pass-through device accesses the shadow page. In other words, corresponding memory data is well-prepared, the DMA access by the target pass-through device can be normally implemented, and the target pass-through device does not sense that the page fault problem has occurred at the virtual machine memory address.

Optionally, in step 101, the virtual machine manager may perform page fault recovery processing on the to-be-accessed virtual machine memory address. When the to-be-accessed virtual machine memory address is in the page fault state, the virtual machine manager sends a page fault request to the operating system of the host machine, to trigger the operating system to invoke a memory management unit (MMU) to perform page fault recovery on the to-be-accessed virtual machine memory address; and determines, after receiving a page fault response fed back by the operating system, that the page fault recovery on the to-be-accessed virtual machine memory address is completed. More specifically, the virtual machine manager may write the page fault request for the to-be-accessed virtual machine memory address to a message queue maintained in the operating system of the host machine, and send an interrupt to the operating system. After receiving the interrupt, the operating system may read the page fault request from the message queue. The operating system may invoke the memory management unit (MMU) to recover the memory data (namely, the memory data belonging to the target virtual machine) in the physical memory page to which the virtual machine memory address is mapped. After the page fault recovery is completed, the operating system may return the page fault response to the virtual machine manager. Therefore, the virtual machine manager may determine that the page fault recovery on the to-be-accessed virtual machine memory address has been completed.

Certainly, in this embodiment, another implementation may also be used to complete page fault recovery on the to-be-accessed virtual machine memory address. For example, the target virtual machine may actively request the operating system of the host machine to perform page fault recovery. No more examples are provided herein. An execution body and specific execution logic of the page fault recovery are not limited in this embodiment, and reference may be made to a page fault recovery technology that is available at present or in the future.

In another case, if the virtual machine manager detects that the to-be-accessed virtual machine memory address determined in step 100 has no page fault problem, the virtual machine manager may directly perform the step of updating the shadow page corresponding to the target physical memory page in which the index information is located, so that the shadow page is consistent with the target physical memory page.

In either case, the virtual machine manager updates the shadow page after a delay after the index information in the available ring is updated. Since the target pass-through device can access only the shadow page and is not allowed to access the target physical memory page in which the index information is located, the target pass-through device can view the index information only after a period of time after the index information in the available ring is updated. However, within this period of time, the page fault recovery work in the first case may be completed, so as to ensure that in either case, when the target pass-through device accesses the shadow page, the memory data corresponding to the to-be-accessed virtual machine memory address is well prepared, and the DMA access by the target pass-through device can be normally implemented.

In this way, based on step 101, in this embodiment, occurrence of a page fault problem on a physical memory page used by a pass-through device may be allowed. Through the page fault recovery processing in step 101, it can be ensured that the pass-through device does not experience a problem such as an access failure due to a memory page fault, and memory access initiated by the pass-through device can be sensed in time by using the shadow page, and needed memory data is prepared for the pass-through device in advance through the page fault recovery. Therefore, dynamic scheduling may be performed on the physical memory page used by the pass-through device without sensing the pass-through device. In this way, in the device pass-through scenario, an exclusive physical memory page does not need to be provided for the pass-through device. The vacated physical memory page can be scheduled to another user as required, thereby supporting the memory flexibility in the device pass-through scenario.

Still referring to FIG. 1, in step 102, the update event may be notified to the target pass-through device, to trigger the target pass-through device to access the shadow page and a physical memory page other than the target physical memory page in the physical memory pages in which the available ring is located, to obtain the to-be-accessed virtual machine memory address.

Referring to FIG. 2, in this embodiment, the virtual machine manager notifies the target pass-through device of update time. In an optional notification manner, the virtual machine manager may write the specified content to the specified base address register address of the target pass-through device, to trigger the target pass-through device to learn of, based on the specified content, the update event of the index information occurring on the available ring. Following the optional implementation of monitoring the update event of index information occurring on the available ring provided in step 100 above, herein, the virtual machine manager may execute the write instruction instead of the device driver, that is, write the specified content to the specified base address register address of the target pass-through device. According to the conventional virtio technology, the target pass-through device may sense the specified content written to the specified base address register address of the target pass-through device, and use the specified content as a notification of the update event, to trigger an access operation on the index information.

As mentioned above, the available ring is stored in the physical memory of the host machine, and the available ring usually occupies a plurality of physical memory pages. The target pass-through device does not have permission to access the target physical memory page in which the index information is located, but the target pass-through device still has permission to access a physical memory page other than the target physical memory page in the physical memory pages in which the available ring is located. Therefore, after receiving the notification, the target pass-through device accesses the shadow page and the physical memory page other than the target physical memory page in the physical memory pages in which the available ring is located, to obtain the to-be-accessed virtual machine memory address.

Herein, with reference to logic of determining, by the virtual machine manager from the available ring, the to-be-accessed virtual machine access address to which the updated index information points, the target pass-through device may obtain the to-be-accessed virtual machine memory address by accessing the shadow page and the physical memory page other than the target physical memory page in the physical memory pages in which the available ring is located. Details are not described herein again.

In this embodiment, after obtaining the to-be-accessed virtual machine memory address, the target pass-through device may perform memory access in the DMA manner. Since the to-be-accessed virtual machine memory address has no page fault problem, the target pass-through device can accurately access the corresponding memory data. In this embodiment, the DMA process of the target pass-through device is not modified. Therefore, the DMA process of the target pass-through device is not described in detail.

Based on the foregoing, in this embodiment, in a device pass-through scenario, it is proposed that a shadow page is constructed for a target physical memory page in which index information in an available ring is located. In this way, when a to-be-accessed virtual machine memory address is transferred, between the target virtual machine and the target pass-through device, based on the available ring, the virtual machine manager may monitor an update event of the index information occurring on the available ring, and when the to-be-accessed virtual machine memory address to which updated index information points has a page fault problem, update the shadow page after ensuring that page fault recovery on the virtual machine memory address is completed, so that the shadow page is consistent with the target physical memory page. After updating the shadow page, the virtual machine manager notifies the target pass-through device of the update event. The target pass-through device accesses the shadow page and a physical memory page other than the target physical memory page in physical memory pages in which the available ring is located, to obtain the to-be-accessed virtual machine memory address. Based on this, in this embodiment, through maintaining of the shadow page, index information accessed by a pass-through device may lag behind index information maintained by a virtual machine, and work such as the page fault recovery may be completed within the lag period, thereby ensuring that memory data preparation has been completed before the pass-through device obtains the to-be-accessed virtual machine memory address, and ensuring that the pass-through device normally implements DMA access without sensing the page fault problem. In this way, a memory page fault can also be supported in the device pass-through scenario. Based on this, reuse of a physical memory page on demand can be supported without affecting memory access by the pass-through device, thereby effectively improving utilization of a physical memory.

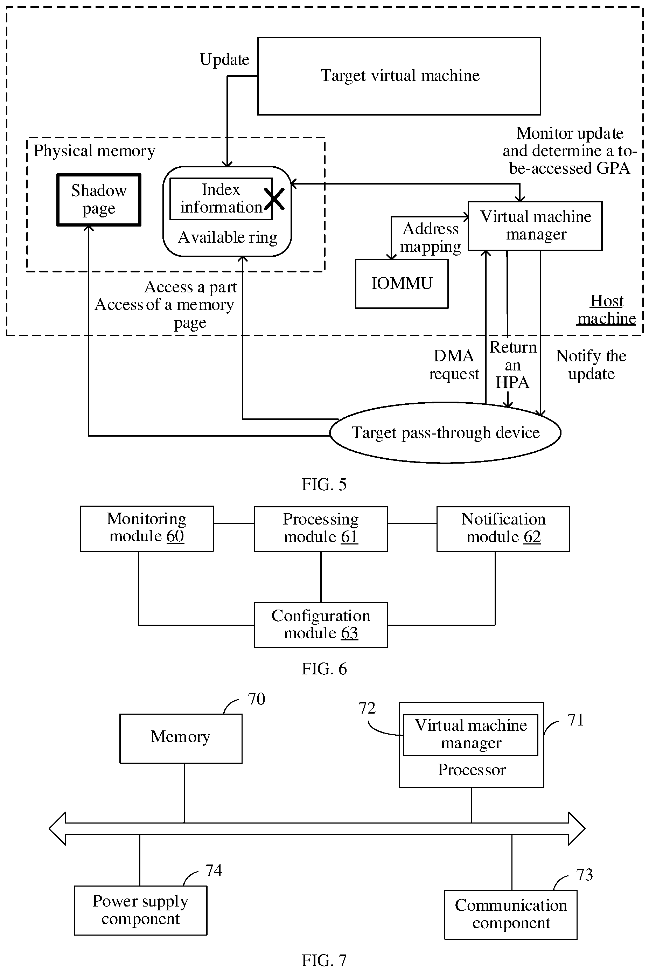

FIG. 4 is a schematic flowchart of another memory access method according to an exemplary embodiment of the present disclosure. FIG. 5 is a schematic logical diagram of the memory access method shown in FIG. 4. Referring to FIG. 4, the method may include the following steps.

Step 400: replace, when receiving an instruction of enabling a memory flexible mode, a physical memory address of a target physical memory page originally recorded in an address mapping table of an IOMMU with a physical memory address of a shadow page, so that a target pass-through device accesses the shadow page and no longer accesses the target physical memory page.

Step 401: determine, in response to monitoring an update event of index information occurring on an available ring, a to-be-accessed virtual machine memory address to which updated index information in the available ring points.

Step 402: when detecting that a determined to-be-accessed virtual machine memory address is in a page fault state, update, after page fault recovery on the to-be-accessed virtual machine memory address is completed, a shadow page constructed for a target physical memory page in which the index information is located, so that the shadow page is consistent with the target physical memory page.

Step 403: notify the target pass-through device of the update event, to trigger the target pass-through device to access the shadow page and a physical memory page other than the target physical memory page in physical memory pages in which the available ring is located, to obtain the to-be-accessed virtual machine memory address.

For step 401 to step 403, refer to the related descriptions in the foregoing embodiment. For brevity, details are not described herein again.

In this embodiment, at least two modes may be supported: a memory flexible mode and a memory inflexible mode. In the memory flexible mode, reuse of a physical memory occupied by a target virtual machine may be allowed. In the memory inflexible mode, reuse of the physical memory occupied by the target virtual machine is not allowed.

In this embodiment, switching between the two modes is supported.

In this embodiment, a pass-through device may access a physical memory address (Host physical address, HPA) of a host machine in a direct memory access (DMA) manner. For the DMA manner, there is a data path between the pass-through device and a physical memory of the host machine, to implement data transmission between the pass-through device and the physical memory. A CPU of the host machine does not need to participate in a data transmission process between the pass-through device and the physical memory. As mentioned above, the pass-through device may learn of a virtual machine memory address (Guestphysical address, GPA) corresponding to an I/O operation by using the foregoing virtualization queue. However, the pass-through device does not know a mapping relationship between the GPA and the HPA. In addition, without limitation, if the pass-through device learns of the entire physical memory address space of the host machine, the pass-through device may initiate DMA access to any physical memory of the host machine, causing a risk of malicious access to the physical memory. Therefore, referring to FIG. 5, in this embodiment, an input-output memory management unit (IOMMU) is introduced.

The IOMMU may be connected between the pass-through device and the physical memory in a communication way. Optionally, the IOMMU may be connected to the pass-through device and the physical memory of the host machine through a communication interface bus in a communication way. A serial interface bus may be a PCI interface bus, a PCIe interface bus, or the like. The IOMMU can ensure that when performing a DMA operation, the pass-through device can access a physical memory occupied by a virtual machine associated with the pass-through device on the host machine.

The IOMMU may maintain an address mapping table. The address mapping table is used for mapping a virtual machine memory address (GPA) accessed by the pass-through device to a physical memory address (HPA) of the host machine. When the pass-through device accesses the physical memory of the host machine in the DMA manner, a VMM may capture a DMA request sent by the pass-through device, and transparently transmit the DMA request to the IOMMU. The IOMMU may obtain a to-be-accessed GPA from the DMA request. Then, the to-be-accessed GPA is matched in the address mapping table stored in the IOMMU, to obtain an HPA corresponding to the to-be-accessed GPA. The pass-through device may access a physical memory page in the physical memory of the host machine by using the HPA corresponding to the to-be-accessed GPA.

Based on this, in this embodiment, step 400 provides an implementation to ensure that the target pass-through device accesses the shadow page and is not allowed to access the foregoing target physical memory page. Referring to FIG. 5, in this implementation, after an instruction of enabling a memory flexible mode is received, the address mapping table of the IOMMU may be modified, and a physical memory address of a target physical memory page is replaced with a physical memory address of a shadow page. In this way, when the target pass-through device initiates a DMA request for a memory page in which the index information is located, a virtual machine memory address carried in the DMA request is mapped to the physical memory address of the shadow page by the IOMMU, so that the target pass-through device accesses the shadow page and no longer accesses the target physical memory page.

In the memory flexible mode, it can be ensured by using the foregoing step 401 to step 403 that memory data preparation has been completed before the target pass-through device obtains the to-be-accessed virtual machine memory address, thereby ensuring that the target pass-through device does not sense a page fault problem, and further supporting memory flexibility.

However, when switching to the memory inflexible mode is needed, after receiving an instruction of disabling the memory flexible mode, the virtual machine manager may modify the physical memory address of the shadow page in the address mapping table of the IOMMU into the physical memory address of the target physical memory page, so that the target pass-through device accesses the target physical memory page.

In this way, the physical memory address (HPA) of the memory page in which the index information is located is switched in the address mapping table of the IOMMU, and the target pass-through device may be adjusted to access the shadow page or access the target physical memory page as required, thereby supporting memory access in a corresponding mode.

It should be understood that the foregoing implementations provided in this embodiment are merely examples. Another implementation may also be used in this embodiment to ensure that the target pass-through device accesses the shadow page and is not allowed to access the foregoing target physical memory page. For example, when the address mapping table of the IOMMU is not modified, the virtual machine manager can perform access control on a target physical page in the memory flexible mode, and when monitoring an access request for the target physical memory page, the virtual machine manager can redirect to the shadow page. After the memory inflexible mode is switched to, the access control function may be disabled. This embodiment is not limited thereto, and no more examples are provided herein.

In addition to switching permission to access the shadow page and the target physical page, in a period of switching between the two modes, in this embodiment, after receiving an instruction of enabling the memory flexible mode, the virtual machine manager may start monitoring and intercepting the specified write instruction, sent by the target virtual machine, for the specified base address register address of the target pass-through device. However, when receiving the instruction of disabling the memory flexible mode, the virtual machine manager stops intercepting the specified write instruction sent by the target virtual machine, and the foregoing monitoring work on the specified write instruction may or may not be stopped, which will not affecting normal running of the memory inflexible mode. Correspondingly, after the memory flexible mode is disabled, the device driver writes the specified content to the specified base address register address based on the specified write instruction, to trigger the target pass-through device to learn of, based on the specified content, the update event of the index information occurring on the available ring. In other words, the update event is notified to the target pass-through device directly by the device driver, instead of by the virtual machine manager.

Based on the foregoing, in this embodiment, after the memory flexible mode is switched to, in a manner of modifying the address mapping table of the IOMMU, the target pass-through device accesses the shadow page and no longer accesses the target physical memory page. Further, the virtual machine manager may be started to monitor and intercept the update event of the index information on the available ring, so that the target pass-through device no longer directly senses the update event. After the memory inflexible mode is switched to, the foregoing settings may be modified back to a related configuration state in the conventional device pass-through technology. Therefore, in this embodiment, seamless switching between the memory flexible mode and the memory inflexible mode can be supported. In addition, since only the target physical memory page in which the index information is located may have another version of data, in one I/O operation, a problem that data versions are inconsistent during access by the target pass-through device to the virtualization queue can be effectively avoided, thereby ensuring that mode switching does not affect accuracy of the I/O operation.

In the foregoing or following embodiments, to further ensure that the mode switching does not affect the accuracy of the I/O operation, a further improved solution is provided.

Write protection is performed on the target physical memory page when an instruction of disabling a memory flexible mode is received.

The write protection is released after it is determined that all memory access operations that have not been completed when the instruction of disabling the memory flexible mode is received are completed.

During the write protection, an update operation on the index information may be temporarily suspended, and this type of write operation continues to be performed after a related I/O operation is completed. A write operation of another type may be rejected to wait for rewriting.

In the improved solution, the virtual machine manager can perform write protection on the target physical memory page when switching to the memory inflexible mode. In other words, a write operation is not allowed to be performed on the physical memory page during the switching. This can ensure that data version consistency is maintained between the target physical memory page and the shadow page during the switching. Therefore, it can avoid the problem that the data versions are inconsistent during access by the target pass-through device to the virtualization queue.

It should be noted that some procedures described in the foregoing embodiments and the accompanying drawings include a plurality of operations performed in a particular order. However, it should be clearly learned that these operations may not be performed in the order in which these operations are performed in the specification or may be performed concurrently. Sequence numbers, such as 101 and 102, of the operations are merely used to distinguish different operations, and the sequence numbers do not represent any execution order. In addition, the procedures may include more or fewer operations, and these operations may be performed in an order or may be performed concurrently.

FIG. 6 is a schematic structural diagram of a virtual machine manager according to another exemplary embodiment of the present disclosure. As shown in FIG. 6, the virtual machine manager may include:
a monitoring module 60, configured to determine, in response to monitoring an update event of index information occurring on an available ring, a to-be-accessed virtual machine memory address to which updated index information in the available ring points;
a processing module 61, configured to: when detecting that the to-be-accessed virtual machine memory address is in a page fault state, update, after page fault recovery on the to-be-accessed virtual machine memory address is completed, a shadow page constructed for a target physical memory page in which the index information is located, so that the shadow page is consistent with the target physical memory page; and
a notification module 62, configured to notify a target pass-through device of the update event, to trigger the target pass-through device to access the shadow page and a physical memory page other than the target physical memory page in physical memory pages in which the available ring is located, to obtain the to-be-accessed virtual machine memory address;
where the to-be-accessed virtual machine memory address is transferred, between a target virtual machine and the target pass-through device on a host machine, based on the available ring.

In an optional embodiment, the virtual machine manager may further include a configuration module 63, and before responding to monitoring the update event of index information occurring on the available ring, the configuration module 63 may be configured to:
replace, when receiving an instruction of enabling a memory flexible mode, a physical memory address of the target physical memory page originally recorded in an address mapping table of an IOMMU with a physical memory address of the shadow page, so that the target pass-through device accesses the shadow page and no longer accesses the target physical memory page.

The target pass-through device performs address mapping by using the IOMMU, to access a physical memory of the host machine; and in the memory flexible mode, reuse of a physical memory occupied by the target virtual machine is allowed.

In an optional embodiment, the configuration module 63 may be further configured to:
modify, when receiving an instruction of disabling the memory flexible mode, the physical memory address of the shadow page in the address mapping table of the IOMMU into the physical memory address of the target physical memory page, so that the target pass-through device accesses the target physical memory page.

Where after the memory flexible mode is disabled, reuse of the physical memory occupied by the target virtual machine is not allowed.

In an optional embodiment, the monitoring module 60 may be further configured to:
intercept a specified write instruction when monitoring that the target virtual machine sends the specified write instruction for a specified base address register address of the target pass-through device, to determine that the update event of the index information occurring on the available ring is monitored;
where the specified write instruction is used for writing specified content to the specified base address register address, to trigger the target pass-through device to learn of, based on the specified content, the update event of the index information occurring on the available ring.

In an optional embodiment, the notification module 62 may be specifically configured to:
write the specified content to the specified base address register address of the target pass-through device, to trigger the target pass-through device to learn of, based on the specified content, the update event of the index information occurring on the available ring.

In an optional embodiment, the monitoring module 60 may be further configured to:
stop, when receiving an instruction of disabling a memory flexible mode, intercepting the specified write instruction sent from the target virtual machine;
where after the memory flexible mode is disabled, the specified content is written to the specified base address register address based on the specified write instruction sent by the target virtual machine, to trigger the target pass-through device to learn of, based on the specified content, the update event of the index information occurring on the available ring.

In an optional embodiment, the monitoring module 60 may be specifically configured to:
determine an index position to which the updated index information points on the available ring;
obtain a descriptor identifier at the index position; and
search a descriptor queue associated with the available ring for a descriptor corresponding to the descriptor identifier, to obtain a virtual machine memory address to which a found descriptor points, and use the virtual machine memory address as the to-be-accessed virtual machine memory address;
where a single descriptor in the descriptor queue points to a single virtual machine memory address.

In an optional embodiment, the processing module 61 may be specifically configured to:
query a page table maintained for the target virtual machine for page entry information corresponding to the to-be-accessed virtual machine memory address; and
determine that the to-be-accessed virtual machine memory address is in the page fault state if the page entry information carries a page fault identifier;
where the page table is used for mapping a virtual machine memory address accessed by the target virtual machine to a physical memory address of the host machine.

In an optional embodiment, the configuration module 63 may be further configured to:
perform write protection on the target physical memory page when an instruction of disabling a memory flexible mode is received; and
release the write protection after determining that all memory access operations, that have not been completed, are completed when the instruction of disabling the memory flexible mode is received.

In an optional embodiment, the processing module 61 may be specifically configured to:
send a page fault request to an operating system of the host machine when the to-be-accessed virtual machine memory address is in the page fault state, to trigger the operating system to invoke a memory management unit to perform page fault recovery on the to-be-accessed virtual machine memory address; and
determine, after receiving a page fault response fed back by the operating system, that the page fault recovery on the to-be-accessed virtual machine memory address is completed.

It should be noted that technical details of the foregoing embodiments of the virtual machine manager may correspond to the related descriptions in the foregoing method embodiments. For brevity, details are not described herein again, which shall not prejudice the protection scope of the present disclosure.

FIG. 7 is a schematic structural diagram of a physical machine according to still another exemplary embodiment of the present disclosure. Referring to FIG. 7, the physical machine may include: a memory 70 and a processor 71. A virtual machine manager 72 may run in the processor 71.

The processor 71 is coupled to the memory 70, and is configured to execute a computer program in the memory 70, to execute the following logic by using the virtual machine manager 72:
determining, in response to monitoring an update event of index information occurring on an available ring, a to-be-accessed virtual machine memory address to which updated index information in the available ring points;
when detecting that a determined to-be-accessed virtual machine memory address is in a page fault state, updating, after page fault recovery on the to-be-accessed virtual machine memory address is completed, a shadow page constructed for a target physical memory page in which the index information is located, so that the shadow page is consistent with the target physical memory page; and
notifying a target pass-through device of the update event, to trigger the target pass-through device to access the shadow page and a physical memory page other than the target physical memory page in physical memory pages in which the available ring is located, to obtain the to-be-accessed virtual machine memory address;
where the to-be-accessed virtual machine memory address is transferred, between a target virtual machine and the target pass-through device on a host machine, based on the available ring.

In an optional embodiment, before responding to monitoring the update event of the index information occurring on the available ring, the virtual machine manager 72 may be further configured to:
replace, when receiving an instruction of enabling a memory flexible mode, a physical memory address of the target physical memory page originally recorded in an address mapping table of an IOMMU with a physical memory address of the shadow page, so that the target pass-through device accesses the shadow page and no longer accesses the target physical memory page;
where the target pass-through device performs address mapping by using the IOMMU, to access a physical memory of the host machine; and in the memory flexible mode, reuse of a physical memory occupied by the target virtual machine is allowed.

In an optional embodiment, the virtual machine manager 72 may be further configured to:
modify, when receiving an instruction of disabling the memory flexible mode, the physical memory address of the shadow page in the address mapping table of the IOMMU into the physical memory address of the target physical memory page, so that the target pass-through device accesses the target physical memory page;
where after the memory flexible mode is disabled, reuse of the physical memory occupied by the target virtual machine is not allowed.

In an optional embodiment, the virtual machine manager 72 may be further configured to:
intercept a specified write instruction when monitoring that the target virtual machine sends the specified write instruction for a specified base address register address of the target pass-through device, to determine that the update event of the index information occurring on the available ring is monitored;
where the specified write instruction is used for writing specified content to the specified base address register address, to trigger the target pass-through device to learn of, based on the specified content, the update event of the index information occurring on the available ring.

In an optional embodiment, when notifying the target pass-through device of the update event, the virtual machine manager 72 may be further configured to:
write the specified content to the specified base address register address of the target pass-through device, to trigger the target pass-through device to learn of, based on the specified content, the update event of the index information occurring on the available ring.

In an optional embodiment, the virtual machine manager 72 may be further configured to:
stop, when receiving an instruction of disabling a memory flexible mode, intercepting the specified write instruction sent from the target virtual machine;
where after the memory flexible mode is disabled, the specified content is written to the specified base address register address based on the specified write instruction sent by the target virtual machine, to trigger the target pass-through device to learn of, based on the specified content, the update event of the index information occurring on the available ring.

In an optional embodiment, when determining the to-be-accessed virtual machine memory address to which the updated index information in the available ring points, the virtual machine manager 72 may be further configured to:
determine an index position to which the updated index information points on the available ring;
obtain a descriptor identifier at the index position; and
search a descriptor queue associated with the available ring for a descriptor corresponding to the descriptor identifier, to obtain a virtual machine memory address to which a found descriptor points, and use the virtual machine memory address as the to-be-accessed virtual machine memory address;
where a single descriptor in the descriptor queue points to a single virtual machine memory address.

In an optional embodiment, the virtual machine manager 72 may be further configured to:
query a page table maintained for the target virtual machine for page entry information corresponding to the to-be-accessed virtual machine memory address; and
determine that the to-be-accessed virtual machine memory address is in the page fault state if the page entry information carries a page fault identifier;
where the page table is used for mapping a virtual machine memory address accessed by the target virtual machine to a physical memory address of the host machine.

In an optional embodiment, the virtual machine manager 72 may be further configured to:
perform write protection on the target physical memory page when receiving an instruction of disabling a memory flexible mode; and
release the write protection after determining that all memory access operations, that have not been completed, are completed when the instruction of disabling the memory flexible mode is received.

In an optional embodiment, the virtual machine manager 72 may be further configured to:
send a page fault request to an operating system of the host machine when the to-be-accessed virtual machine memory address is in the page fault state, to trigger the operating system to invoke a memory management unit to perform page fault recovery on the to-be-accessed virtual machine memory address; and
determine, after receiving a page fault response fed back by the operating system, that the page fault recovery on the to-be-accessed virtual machine memory address is completed.

Further, as shown in FIG. 7, the physical machine further includes other components such as a communication component 73 and a power supply component 74. Only some components are schematically provided in FIG. 7, which does not mean that the physical machine includes only the components shown in FIG. 7.

It should be noted that technical details of the foregoing embodiments of the physical machine may correspond to the related descriptions in the foregoing method embodiments. For brevity, technical details are not described herein again, which shall not prejudice to the protection scope of the present disclosure.

Correspondingly, an embodiment of the present disclosure further provides a computer-readable storage medium storing a computer program. When the computer program is executed, steps that can be performed by the virtual machine manager in the foregoing method embodiments can be implemented.

The memory in FIG. 7 is configured to store the computer program, and may be configured to store various other data to support operations on a computing platform. Examples of the data include instructions, contact data, phonebook data, messages, pictures, videos, and the like of any application program or method used to be operated on the computing platform. The memory may be implemented by any type of volatile or non-volatile storage device, or a combination thereof, for example, a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk, or an optical disk.

The communication component in FIG. 7 is configured to facilitate communication between a device in which the communication component is located and other devices in a wired or wireless manner. The device in which the communication component is located may access a wireless network based on a communication standard, such as a mobile communication network such as WiFi, 2G, 3G, 4G/LTE, or 5G, or a combination thereof. In an exemplary embodiment, the communication component receives a broadcast signal or broadcast related information from an external broadcast management system through a broadcast channel. In an exemplary embodiment, the communication component further includes a near field communication (NFC) module, to promote short range communication. For example, the NFC module may be implemented based on a radio frequency identification (RFID) technology, an infra-red data association (IrDA) technology, an ultra wideband (UWB) technology, a Bluetooth (BT) technology, and other technologies.

The power supply component in FIG. 7 provides power for components of a device in which the power supply component is located. The power supply component may include a power supply management system, one or more power supplies, and other components related to generation, management, and allocation of power for the device in which the power supply component is located.

A person skilled in the art should understand that the embodiments of the present disclosure may be provided as a method, a system, or a computer program product. Therefore, the present disclosure may use a form of hardware-only embodiments, software-only embodiments, or embodiments combining software and hardware. In addition, the present disclosure may use a form of a computer program product implemented on one or more computer available storage media (including but not limited to a disk memory, a CD-ROM, an optical memory, and the like) including computer available program code.

The present disclosure is described with reference to flowcharts and/or block diagrams of the method, device (system), and computer program product according to the embodiments of the present disclosure. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specified function in one or more processes in the flowcharts and/or in one or more blocks in the block diagrams.

These computer program instructions may also be stored in a computer-readable memory that can instruct the computer or another programmable data processing device to work in a specified manner, so that the instructions stored in the computer-readable memory generate an artifact that includes an instruction apparatus. The instruction apparatus implements a specified function in one or more processes in the flowcharts and/or in one or more blocks in the block diagrams.

These computer program instructions may also be loaded into a computer or other programmable data processing device, so that a series of operations and steps are performed in the computer or the other programmable device, thereby generating computer-implemented processing. Therefore, the instructions executed in the computer or the other programmable device provide steps for implementing a specified function in one or more processes in the flowcharts and/or in one or more blocks in the block diagrams.

It should be further noted that the terms "include", "contain", and any variants thereof are intended to cover a non-exclusive inclusion. Therefore, in the context of a process, a method, a product, or a device that includes a series of elements, the process, method, product, or device not only includes such elements, but also includes other elements not specified expressly, or may include inherent elements of the process, method, product, or device. Unless otherwise specified, an element limited by "include a/an..." does not exclude other same elements existing in the process, method, product, or device that includes the element.

It should be noted that, user information (including, but not limited to, user equipment information, user personal information, and the like) and data (including, but not limited to, data for analysis, stored data, displayed data, and the like) involved in the present disclosure are all information and data that are authorized by a user or that are sufficiently authorized by all parties. In addition, collection, use, and processing of related data need to comply with related laws and regulations as well as standards in a related country and region, and a corresponding operation entry is provided for the user to select authorization or rejection.

The foregoing descriptions are merely embodiments of the present disclosure, but are not intended to limit the present disclosure. A person skilled in the art may make various modifications and variations to the present disclosure. Any modification, equivalent replacement, or improvement made within the spirit and principle of the present disclosure shall fall within the protection scope of the present disclosure.

## Claims

1. A memory access method, applied to a virtual machine manager in a host machine, wherein a to-be-accessed virtual machine memory address is transferred, between a target virtual machine and a target pass-through device on the host machine, based on an available ring, and the method comprises:
determining, in response to monitoring an update event of index information occurring on the available ring, the to-be-accessed virtual machine memory address to which updated index information in the available ring points;
when detecting that a determined to-be-accessed virtual machine memory address is in a page fault state, updating, after page fault recovery on the to-be-accessed virtual machine memory address is completed, a shadow page constructed for a target physical memory page in which the index information is located, so that the shadow page is consistent with the target physical memory page;
notifying the target pass-through device of the update event, to trigger the target pass-through device to access the shadow page and a physical memory page other than the target physical memory page in physical memory pages in which the available ring is located, to obtain the to-be-accessed virtual machine memory address.

2. The method according to claim 1, wherein before responding to monitoring the update event of the index information occurring on the available ring, the method further comprises:
replacing, when receiving an instruction of enabling a memory flexible mode, a physical memory address of the target physical memory page originally recorded in an address mapping table of an input-output memory management unit (IOMMU) with a physical memory address of the shadow page, so that the target pass-through device accesses the shadow page and no longer accesses the target physical memory page;
wherein the target pass-through device performs address mapping by using the IOMMU, to access a physical memory of the host machine; and in the memory flexible mode, reuse of a physical memory occupied by the target virtual machine is allowed.

3. The method according to claim 2, wherein the method further comprises:
modifying, when receiving an instruction of disabling the memory flexible mode, the physical memory address of the shadow page in the address mapping table of the IOMMU into the physical memory address of the target physical memory page, so that the target pass-through device accesses the target physical memory page;
wherein after the memory flexible mode is disabled, reuse of the physical memory occupied by the target virtual machine is not allowed.

4. The method according to claim 1, wherein the method further comprises:
intercepting a specified write instruction when monitoring that the target virtual machine sends the specified write instruction for a specified base address register address of the target pass-through device, to determine that the update event of the index information occurring on the available ring is monitored;
wherein the specified write instruction is used for writing specified content to the specified base address register address, to trigger the target pass-through device to learn of, based on the specified content, the update event of the index information occurring on the available ring.

5. The method according to claim 4, wherein the notifying the target pass-through device of the update event comprises:
writing the specified content to the specified base address register address of the target pass-through device, to trigger the target pass-through device to learn of, based on the specified content, the update event of the index information occurring on the available ring.

6. The method according to claim 4, wherein the method further comprises:
stopping, when receiving an instruction of disabling a memory flexible mode, intercepting the specified write instruction sent from the target virtual machine;
wherein after the memory flexible mode is disabled, the specified content is written to the specified base address register address based on the specified write instruction sent by the target virtual machine, to trigger the target pass-through device to learn of, based on the specified content, the update event of the index information occurring on the available ring.

7. The method according to claim 1, wherein the determining the to-be-accessed virtual machine memory address to which updated index information in the available ring points comprises:
determining an index position to which the updated index information points on the available ring;
obtaining a descriptor identifier at the index position;
searching a descriptor queue associated with the available ring for a descriptor corresponding to the descriptor identifier, to obtain a virtual machine memory address to which a found descriptor points, and using the virtual machine memory address as the to-be-accessed virtual machine memory address;
wherein a single descriptor in the descriptor queue points to a single virtual machine memory address.

8. The method according to claim 1, wherein the method further comprises:
querying a page table maintained for the target virtual machine for page entry information corresponding to the to-be-accessed virtual machine memory address;
determining that the to-be-accessed virtual machine memory address is in the page fault state when the page entry information carries a page fault identifier;
wherein the page table is used for mapping a virtual machine memory address accessed by the target virtual machine to a physical memory address of the host machine.

9. The method according to claim 8, wherein the method further comprises:
performing write protection on the target physical memory page when receiving an instruction of disabling a memory flexible mode;
releasing the write protection after determining that all memory access operations, that have not been completed, are completed when the instruction of disabling the memory flexible mode is received.

10. The method according to claim 1, wherein the method further comprises:
sending a page fault request to an operating system of the host machine when the to-be-accessed virtual machine memory address is in the page fault state, to trigger the operating system to invoke a memory management unit to perform page fault recovery on the to-be-accessed virtual machine memory address; and
determining, after receiving a page fault response fed back by the operating system, that the page fault recovery on the to-be-accessed virtual machine memory address is completed.

11. A virtual machine manager, comprising:
a monitoring module, configured to determine, in response to monitoring an update event of index information occurring on an available ring, a to-be-accessed virtual machine memory address to which updated index information in the available ring points;
a processing module, configured to: when detecting that the to-be-accessed virtual machine memory address is in a page fault state, update, after page fault recovery on the to-be-accessed virtual machine memory address is completed, a shadow page constructed for a target physical memory page in which the index information is located, so that the shadow page is consistent with the target physical memory page;
a notification module, configured to notify a target pass-through device of the update event, to trigger the target pass-through device to access the shadow page and a physical memory page other than the target physical memory page in physical memory pages in which the available ring is located, to obtain the to-be-accessed virtual machine memory address;
wherein the to-be-accessed virtual machine memory address is transferred, between a target virtual machine and the target pass-through device on a host machine, based on the available ring.

12. The virtual machine manager according to claim 11, further comprising a configuration module, wherein before the monitoring module responds to monitoring the update event of the index information occurring on the available ring, the configuration module is configured to:
replace, when receiving an instruction of enabling a memory flexible mode, a physical memory address of the target physical memory page originally recorded in an address mapping table of an IOMMU with a physical memory address of the shadow page, so that the target pass-through device accesses the shadow page and no longer accesses the target physical memory page;
wherein the target pass-through device performs address mapping by using the IOMMU, to access a physical memory of the host machine; and in the memory flexible mode, reuse of a physical memory occupied by the target virtual machine is allowed.

13. A physical machine, comprising a memory and a processor, wherein a virtual machine manager runs in the processor;
the memory is configured to store one or more computer instructions;
the processor is coupled to the memory and configured to execute the one or more computer instructions, to perform the memory access method according to any one of claims 1 to 10 by using the virtual machine manager.

14. A computer-readable storage medium storing computer instructions, wherein the computer instructions, when executed by one or more processors, cause the one or more processors to perform the memory access method according to any one of claims 1 to 10.

15. A computer program product, comprising a computer program which, when executed by a processor, implements the method according to any one of claims 1 to 10.
